# EUROPÄISCHE PATENTANMELDUNG

(11) **EP 0 831 507 A2**
(43) Veröffentlichungstag der Anmeldung: **25.03.1998**
(21) Anmeldenummer: 97112068.8
(22) Anmeldetag: 14.07.1997
(51) Int. Cl.: H01H 50/14, H01H 50/02

(54) **Relais mit Überlastschutz**

(30) Priorität: 11.09.1996 DE 19636932
(71) Anmelder: SIEMENS AKTIENGESELLSCHAFT, 80333 München (DE)
(72) Erfinder: Siepmann, Richard, 81369 München München (DE); Plöger, Gregor, 10781 Berlin (DE)

(57) **Zusammenfassung**

Das Relais besitzt als Überstromschutz bzw. Kurzschlußschutz einen Kaltleiter in Form einer Folie aus polymerem Material, welche großflächig zwischen einem Verbindungsabschnitt (6) eines Anschlußelementes (4) und einer parallel dazu angekoppelten Anschlußplatte (3) im Relaisinneren angeordnet und dadurch in Serie in den Lastkreis eingeschaltet ist. Bei Auftreten eines Überstroms bzw. eines Kurzschlusses wird der Kaltleiter (7) sprungartig hochohmig und unterbricht dadurch den Lastkreis.

## Beschreibung

Die Erfindung betrifft ein Relais mit mindestens einem Kontaktpaar und mit Anschlußelementen für einen Lastkreis, wobei mindestens eines der Anschlußelemente mit einem flachen Verbindungsabschnitt parallel an eine Anschlußplatte zur Herstellung einer elektrischen Verbindung mit einem Kontaktelement im Relaisinneren gekoppelt ist.

Ein Relais der eingangs genannten Art ist beispielsweise aus der DE 37 08 723 A1 bekannt. Derartige Relais werden in verschiedenen Konstruktionen, beispielsweise in der Automobiltechnik, aber auch für andere Einsatzzwecke, verwendet. In Automobilen werden die Stromkreise üblicherweise in einer Sicherungsbox abgesichert und dann über Relais oder Schalter zum Verbraucher geleitet. Neue Konzepte, vor allem mit Bus-Systemen, erfordern jedoch einen selbstsichernden Schalter. Das bedeutet, daß ein peripher angeordnete Relais unmittelbar an seinem Einsatzort gegen Überlast gesichert werden muß. So ist es beispielsweise auch bekannt, an einem Relais ein Sicherungselement mit Hilfe eines zusätzlichen Konstruktionsaufbaues anzubringen (DE 32 09 915 A1). Diese bekannte Konstruktion erfordert aber einen speziellen Aufbau des Relais und ist überdies platzaufwendig.

Ziel der vorliegenden Erfindung ist es, ein Relais der eingangs genannten Art mit einem Überlastschutz zu versehen, der nur eine geringe Konstruktionsänderung bei einem ansonsten allgemein üblichen Relaisaufbau und zudem nahezu keinen zusätzlichen Platz erfordert.

Erfindungsgemäß wird dieses Ziel dadurch erreicht, daß zwischen dem Verbindungsabschnitt und der Anschlußplatte ein schichtförmiger Kaltleiter angeordnet ist. Vorzugsweise wird dabei ein Kaltleiter in Form einer Folie aus polymerem Kunststoff verwendet, wobei der Verbindungsabschnitt und die Anschlußplatte jeweils als Elektroden des Kaltleiters dienen. Derartige polymere Kaltleiter sind beispielsweise aus der US 4 237 441 bekannt.

Die spezielle Gestaltung des Verbindungsabschnittes am Anschlußelement und der Anschlußplatte als Elektroden des Kaltleiters hängt von der sonstigen Konstruktion des Relais ab. Je nachdem, ob ohnehin großflächige Verbindungselemente vorhanden sind, können diese mit mehr oder weniger Modifikationen verwendet werden; bei anderen Relais kann beispielsweise eine zusätzliche Anschlußplatte ohne größere Konstruktionsänderung im Relais untergebracht werden, die dann beispielsweise über eine Litze mit einer Kontaktfeder oder einem sonstigen Kontaktelement verbunden werden kann.

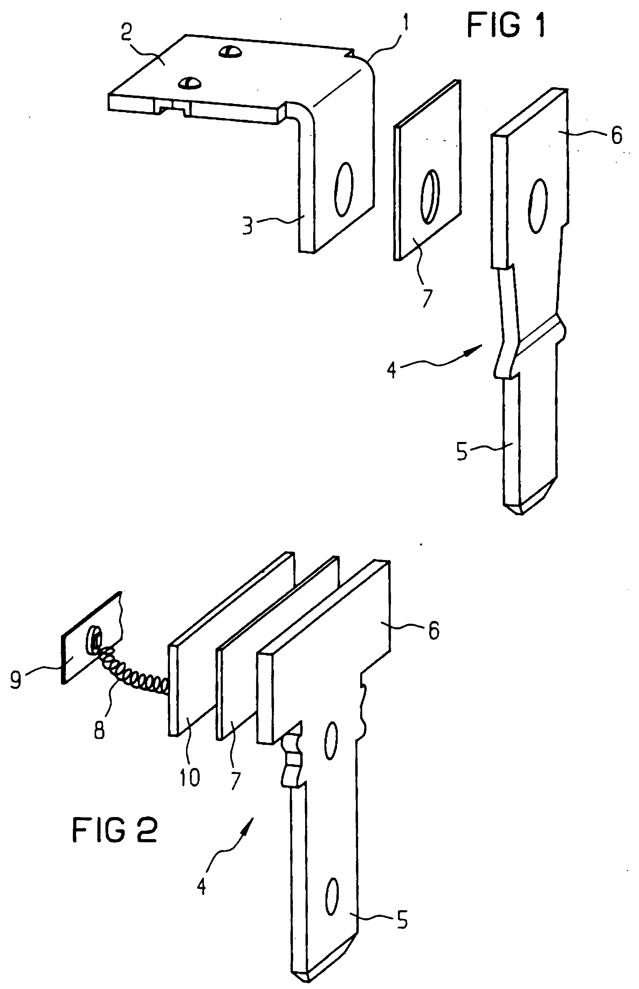

Die Erfindung wird nachfolgend an einem Ausführungsbeispiel anhand der Zeichnung näher erläutert. Es zeigt Figur 1 die Anordnung einer Kaltleiter-Folie zwischen einem Jochschenkel und einem Flachstecker eines Relais und Figur 2 die Anordnung einer Kaltleiter-Folie zwischen einem Flachstecker und einer zusätzlichen Anschlußplatte im Relais.

In Figur 1 ist ein Teil eines Relais gezeigt, welches im Gesamtaufbau beispielsweise ähnlich dem gemäß DE 37 08 723 A1 sein könnte. Dargestellt ist hier nur ein L-förmiges Joch 1, an dessen erstem Schenkel 2 ein nicht gezeigter Anker mit einer Ankerfeder gelagert sein könnte. Der zweite Schenkel 3 ist mit einem ebenfalls nicht dargestellten Kern verbunden, der innerhalb einer Spule angeordnet ist. Das Joch dient als Stromzuführung zu einer mit dem Anker verbundenen Kontaktfeder. Zu diesem Zweck ist ein flaches Anschlußelement 4 mit dem Jochschenkel 3 verbunden. Das Anschlußelement 4 besitzt in üblicher Weise einen Flachstecker 5 und bildet an seinem gegenüberliegenden Ende einen flachen Verbindungsabschnitt 6, der bei herkömmlicher Bauweise großflächig auf den Jochschenkel 3 aufgeschweißt oder mit diesem verlötet wird.

Bei der erfindungsgemäßen Ausführungsform wird nun ein Kaltleiter 7 in Form einer Folie aus einem polymeren Kaltleitermaterial als Zwischenschicht zwischen dem Jochschenkel 3 und dem Verbindungsabschnitt 6 angeordnet. Der Kaltleiter 7 wird auf diese Weise in Serie in den Laststromkreis des Anschlußelementes 4 eingeschaltet. Derartige Kaltleiter, insbesondere solche aus polymerem Material, wie sie beispielsweise aus der US 4 237 441 oder der EP 0 487 920 A1 bekannt sind, sind bis zu ihrer Sprungtemperatur niederohmig, während sie oberhalb der Sprungtemperatur ihren Widerstand innerhalb weniger Grade um Zehnerpotenzen erhöhen. Solange also der Kaltleiter 7 in dem Lastkreis vom Nennstrom durchflossen wird, bleibt er im niederohmigen Bereich, dagegen wird der Kaltleiter bei Überlast durch die quadratisch mit dem Strom ansteigende Verlustleistung bis auf die Sprungtemperatur erhitzt. Bei weiter anstehender Spannung fließt dann nur noch so viel Strom, wie zum Halten der Temperatur benötigt wird. Hierdurch werden die Schaltglieder des Relais, die Leitungen, die Stromversorgung und der Verbraucher gegen Überlast bzw. bei Kurzschluß geschützt.

Figur 2 zeigt eine etwas andere Ausführungsform, nämlich die Anwendung des erfindungsgemäßen Überlastschutzes für ein Relais, bei dem der Laststrom nicht über das Joch, sondern vom Anschlußelement über eine Litze zu einer Kontaktfeder geführt wird. Ein solches Relais ist beispielsweise in der DE 34 28 595 C1 dargestellt. Auch in diesem Fall besitzt ein Lastanschlußelement 4 einen Flachstecker 5 und einen flachen Verbindungsabschnitt 6. Im Relaisinneren wird der Laststrom über eine Litze 8 unmittelbar an eine Kontaktfeder 9 geführt, welche mit einem nicht gezeigten Anker verbunden ist oder zumindest durch diesen betätigt wird. Während bei herkömmlichem Aufbau die Litze 8 unmittelbar mit dem Verbindungsabschnitt 6 verbunden wäre, ist bei dem erfindungsgemäßen Aufbau eine zusätzliche Anschlußplatte 10 vorgesehen, die großflächig dem Verbindungsabschnitt 6 gegenüber steht. Von dieser Anschlußplatte 10 führt die angeschweißte oder verlötete Litze 8 zur Kontaktfeder 9. Erfindungsgemäß ist nun zwischen der Anschlußplatte 10 und dem Verbindungsabschnitt 6 eine Kaltleiterfolie 7 eingefügt, deren Funktion die gleiche ist wie bei dem Beispiel nach Figur 1.

Wie man aus den Ausführungsbeispielen ersehen kann, kann der Kaltleiter 7, insbesondere wenn er in Form einer polymeren Folie vorliegt, in eine anwendungsspezifische Form verarbeitet werden. Es kommt lediglich darauf an, daß er zwischen zwei Elektrodenplatten im Lastkreis angeordnet wird. Die Elektrodenplatten werden bei den gezeigten Ausführungsbeispielen durch Verbindungsabschnitte 6 auf einer Seite und eine Anschlußplatte 3 bzw. 10 auf der anderen Seite gebildet.

## Patentansprüche

1. Relais mit mindestens einem Kontaktpaar und mit Anschlußelementen (4) für einen Lastkreis, wobei mindestens eines der Anschlußelemente (4) mit einem flachen Verbindungsabschnitt (6) parallel an eine Anschlußplatte (3;10) zur Herstellung einer elektrischen Verbindung mit einem Kontaktelement (9) im Relaisinneren gekoppelt ist,
**dadurch gekennzeichnet,** daß zwischen dem Verbindungsabschnitt (6) einerseits und der Anschlußplatte (3;10) andererseits ein schichtförmiger Kaltleiter (7) angeordnet ist.

2. Relais nach Anspruch 1,
**dadurch gekennzeichnet,** daß der Kaltleiter (7) eine Folie aus polymerem Kunststoff ist, wobei der Verbindungsabschnitt (6) und die Anschlußplatte (3;10) jeweils als Elektroden des Kaltleiters (7) dienen.

3. Relais nach Anspruch 1 oder 2,
**dadurch gekennzeichnet,** daß der Verbindungsabschnitt (6) als Verlängerung eines Flachsteckers (5) ausgebildet ist.

4. Relais nach einem der Ansprüche 1 bis 3,
**dadurch gekennzeichnet,** daß die Anschlußplatte (3) durch einen Abschnitt eines Joches (1) des Relais-Magnetsystems gebildet ist.

5. Relais nach einem der Ansprüche 1 bis 3,
**dadurch gekennzeichnet,** daß die Anschlußplatte (10) als zusätzliches Teil von dem Verbindungsabschnitt (6) - über den Kaltleiter (7) - getragen wird und über ein flexibles Leiterelement (8) mit einem beweglichen Kontaktelement (9) verbunden ist.
